# EUROPÄISCHE PATENTSCHRIFT

(11) **EP 3 309 648 B1**
(45) Veröffentlichungstag und Bekanntmachung des Hinweises auf die Patenterteilung: **02.12.2020**
(21) Anmeldenummer: 17020290.7
(22) Anmeldetag: 10.07.2017
(51) Int. Cl.: G06F 1/16, H04M 1/02

(54) **COMPUTERANORDNUNG MIT EINEM TABLETTEIL UND EINEM BASISTEIL**
COMPUTER ASSEMBLY WITH A TABLET PART AND A BASE PART
SYSTÈME INFORMATIQUE POURVU D'UNE PARTIE TABLETTE ET D'UNE PARTIE DE BASE

(30) Priorität: 11.10.2016 DE 102016119273
(43) Veröffentlichungstag der Anmeldung: 18.04.2018
(73) Patentinhaber: Porsche Lizenz- und Handelsgesellschaft mbH & Co. KG, 71636 Ludwigsburg (DE)
(72) Erfinder: TRAGATSCHNIG, Jörg, 5700 Zell am See (AT)

(56) Entgegenhaltungen:
- US-A1- 2005 122 671
- US-A1- 2014 126 126
- US-B1- 6 317 315

## Beschreibung

Die Erfindung betrifft eine Computeranordnung mit einem Tabletteil und einem Basisteil, die über eine Schwenkleiste lösbar miteinander verbindbar sind, wobei eine Scharnieranordnung und eine Feststelleinrichtung vorgesehen sind und der Bildschirm und das Basisteil mittels einer Einstelleinrichtung in einer Position zueinander fixierbar sind, wobei mindestens ein elektrisches Kontaktpaar, bestehend aus einem ersten und einem zweiten Kontaktorgan, und mindestens eine Steckverbindung, bestehend aus einem Steckerteil und einer Aufnahmeöffnung, vorgesehen sind, die im gekoppelten Zustand des Tabletteils mit dem Basisteil sowohl eine elektrische als auch mechanische Verbindung ausbilden, wobei das Basisteil über die Scharnieranordnung mit einer Schwenkleiste verbunden ist, die an einer zum Tabletteil gerichteten Längsseite mindestens zwei Steckerteile und, mindestens ein erstes Kontaktorgan aufweist und das das Tabletteil an einer zur Schwenkleiste gerichteten Längsseite mindestens zwei Aufnahmeöffnungen und mindestens ein zweites Kontaktorgan aufweist.

Sogenannte Tablet-Computer sind inzwischen weit verbreitet. Insbesondere die einfache, intuitive Handhabung, bei der Eingabebefehle über einen Touch-Bildschirm stattfinden, erleichtert den Gebrauch eines derartigen Computers. Für besondere Anwendungen, wie zum Beispiel für Textprogramme, hat es sich jedoch als hilfreich erwiesen, dem Tablet beispielsweise externe Tastaturen zuzuordnen. Auch ist es inzwischen bekannt, eine Tablet-Laptop-Kombination anzubieten, wobei diese Computeranordnung aus einem Tabletteil und einem Basisteil besteht, die miteinander lösbar verbindbar sind. Ein Beispiel hierfür stellt beispielsweise das Surface Book von Microsoft dar. Eine hier verwendete Scharnieranordnung zur Verbindung des Tabletteils mit dem Basisteil ist in der US 2016/0041589 A1 beschrieben. Der Vorteil einer derartigen Computeranordnung besteht darin, einerseits das Tabletteil als einfache Eingabe-Wiedergabe-Einheit für sich alleine nutzen zu können und andererseits, das Tabletteil und Basisteil zusammen als leistungsfähigen Laptop für professionelle Arbeiten einsetzen zu können. Ein Nachteil dieser bekannten Computeranordnung besteht jedoch in der sehr aufwendigen Scharnieranordnung, die zudem keine vollständige Rotation, d.h. eine Rotation um 360°, des Tabletteils in Bezug auf das Basisteil ermöglicht.

In der gattungsgemäßen US 6,317,315 B1 ist im Rahmen der Würdigung des Standes der Technik darüber hinaus eine Computeranordnung offenbart, die eine Schwenkleiste aufweist, die über eine Längsseite mittels Kontaktorganen mit einem Bildschirm verbindbar ist, wobei gerade diese Schwenkleiste als nachteilig für die Funktionalität und die Kompaktheit der Computeranordnung beschrieben wurde. Darüber hinaus ist der Bildschirm hier lediglich in einer Position fixierbar und daher nur bedingt als Tabletteil verwendbar. Des Weiteren ist aus der US 2005/122671 A1 eine Computeranordnung bekannt, bei der ein Bildschirm unlösbar über eine Verbindungsstruktur mit einem Basisteil verbunden ist, wobei die Scharnieranordnung zwei Verzahnungspaare und mindestens eine Reibscharnieranordnung aufweist die der Einstellung des Bildschirmes in unterschiedlichen Winkeln zum Basisteil dienen soll.

Aufgabe der Erfindung ist es daher, die obengenannten Nachteile auf möglichst einfache und kostengünstige Weise zu vermeiden.

Diese Aufgabe wird erfindungsgemäß dadurch gelöst, dass der Bildschirm als Tabletteil ausgeführt ist, wobei das elektrische Kontaktpaar als Connector-Verbindung mit einem Connectororgan als erstes Kontaktorgan und einem Buchsenorgan als zweites Kontaktorgan ausgeführt ist, wobei das Steckerteil und das Connectororgan an der Schwenkleiste und die Aufnahmeöffnung und das Buchsenorgan am Tabletteil vorgesehen sind, wobei die Scharnieranordnung zwei Verzahnungspaare und mindestens eine, einem Verzahnungspaar zugeordnete Einstelleinrichtung aufweist, die als Reibscharnieranordnung mit zwei Reiborganen ausgeführt ist, wobei die Verzahnungspaare jeweils zwei symmetrisch zu einer Querachse angeordnete, ineinander greifbare Verzahnungsorgane ausbilden, wobei zumindest einem Verzahnungspaar jeweils eine Reibscharnieranordnung zugeordnet ist, wobei das Reiborgan jeweils einen Reibzylinder aufweist, wobei in den Reibzylinder des ersten Reiborgans ein Stiftorgan des ersten Verzahnungsorgans der Schwenkleiste und in den Reibzylinder des zweiten Reiborgans ein Stiftorgan des zweiten Verzahnungsorgans des Basisteils eingreift, wobei die Reiborgane fest über ein Stegorgan miteinander verbunden sind. Auch kann hierdurch im verbundenen Zustand des Tabletteils mit dem Basisteil das Tabletteil auf einfache Weise in jeglicher Position in Bezug auf das Basisteil fixiert werden.

Dadurch, dass eine Schwenkleiste vorgesehen ist, die über die Scharnieranordnung mit dem Basisteil verbunden ist, ist es möglich, eine Rotation mit bis zu 360° über einfache Verzahnungsorgane zu gewährleisten. Hierdurch kann das Tabletteil auch im mit dem Basisteil gekoppelten Zustand als Tabletteil genutzt werden, wobei das Basisteil als Unterlage dient. Die Reibscharnieranordnung dient hierbei als Verbindungsstruktur der Schwenkleiste mit dem Basisteil und gewährleistet hierdurch einen besonders kompakten Aufbau.

In einer besonders vorteilhaften Ausführungsform sind die Verzahnungsorgane eines Verzahnungspaares als längsverzahnte, feststehende Verzahnungsorgane ausgebildet.

In vorteilhafter Weise weist die Feststelleinrichtung im Bereich der Steckverbindung einen verschiebbaren Schließstift auf, der im gekoppelten Zustand mit dem jeweiligen Steckerteil zusammenwirkt. Der Schließstift kann hierbei sowohl Teil des Steckerteils als auch im Bereich der Aufnahmeöffnung vorgesehen sein. Um die Feststelleinrichtung auf einfache Weise zu betätigen, kann die Feststelleinrichtung ein Antriebsmittel, wie z. B. einen Elektromotor oder einen Elektromagneten, aufweisen. Dieses Antriebsmittel steuert dann die Schließstifte an. Es ist jedoch auch denkbar, die Schließstifte unter Vorspannung derart anzuordnen, dass eine manuelle Betätigung vorgenommen werden muss, um das Tabletteil vom Basisteil zu lösen.

In einer Ausführungsform ist es besonders vorteilhaft, wenn eine zentrale Connector-Verbindung vorgesehen ist.

Es ist insbesondere vorteilhaft, wenn bezüglich der gemeinsamen Querachse des Tabletteils und des Basisteils das mindestens eine elektrische Kontaktpaar und die mindestens zwei Steckverbindungen symmetrisch ausgeführt sind. Hierdurch ist es auf besonders einfache Art und Weise möglich, das Tabletteil mit einer Displayseite gerichtet zu einer Tastatur des Basisteils oder von diesem abgewandt anzuordnen, ohne dass eine Doppelbelegung des mindestens einen Kontaktpaares erforderlich ist. Das Tabletteil kann auf diese Art und Weise die Tastatur verschließen und gleichzeitig als Eingabe-Wiedergabe-Einheit genutzt werden. Eventuell ist hierzu eine Doppelbelegung der elektrischen Kontaktpaare notwendig.

Um eine hohe Leistungsfähigkeit zu gewährleisten, kann sowohl im Tabletteil als auch im Basisteil ein Prozessor vorgesehen sein.

Bei einer besonders vorteilhaften Ausführungsform weist zumindest das Tabletteil ein Gehäuse aus einem ferromagnetischen Werkstoff auf, derart, dass Zubehörteile, wie z. B. ein Eingabestift, über eine magnetische Verbindung am Tabletteil anzuordnen sind.

Die Erfindung wird anhand einer Zeichnung näher erläutert, hierbei zeigt:
- Fig. 1: eine perspektivische Ansicht einer erfindungsgemäßen Computeranordnung im endkoppelten Zustand,
- Fig. 2: eine Detailansicht einer entkoppelten Scharnieranordnung aus Figur 1,
- Fig. 3: eine teilweise geschnittene Teilansicht eines Basisteils der Computeranordnung aus Figur 1, und
- Fig. 4: eine teilweise geschnittene Teilansicht eines Tabletteils der Computeranordnung aus Figur 1.

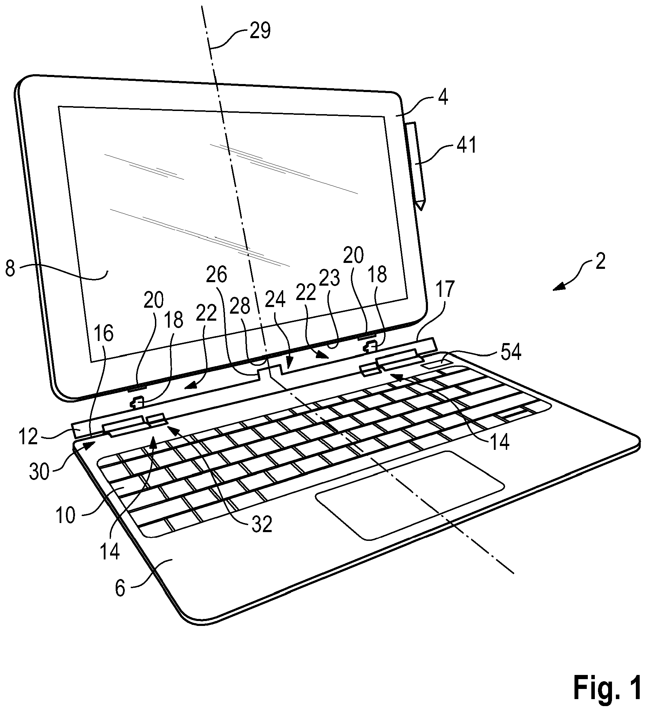

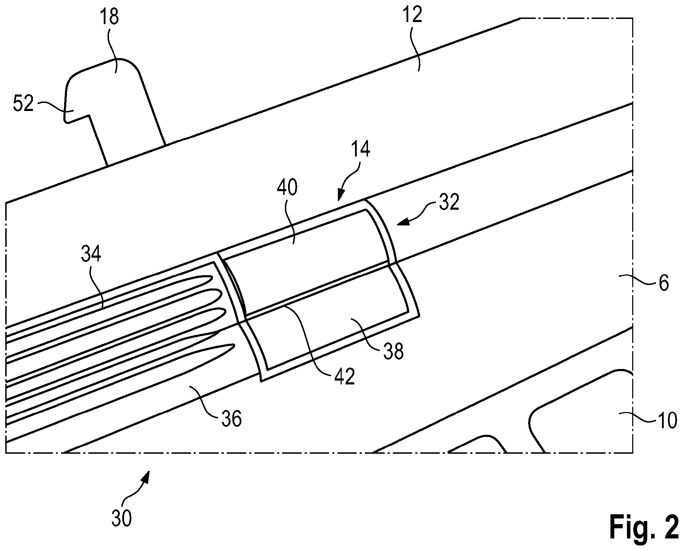

Figuren 1 und 2 zeigen in perspektivischen Ansichten eine erfindungsgemäße Computeranordnung 2, wobei im dargestellten Zustand ein Tabletteil 4 von einem Basisteil 6 entkoppelt ist. Das Tabletteil 4 kann auf bekannte Weise als "Stand-alone" Eingabe- und Wiedergabeteil dienen. Im Wesentlichen wird hierbei ein berührungsempfindliches Display 8 genutzt. Das Tabletteil 4 besitzt eine eigene Stromversorgung und einen eigenen Prozessor.

Das Basisteil 6, auch Dockingteil genannt, verfügt ebenfalls über eine eigene Stromversorgung und einen eigenen Prozessor. Des Weiteren besitzt das Basisteil 6 eine Eingabetastatur 10. Des Weiteren ist in dieser Ansicht eine Schwenkleiste 12 zur Kopplung des Basisteils 6 mit dem Tabletteil 4 vorgesehen, die über eine Scharnieranordnung 14 mit einer Längsseite 16 des Basisteils 6 verbunden ist.

Die Schwenkleiste 12 weist an seiner zum Tabletteil gerichteten Längsseite 17 zwei Steckerteile 18 auf, die zusammen mit jeweils einer versteckt dargestellten Aufnahmeöffnung 20 im Tabletteil 4 eine Steckverbindung 22 bilden und derart die Schwenkleiste 12 und damit das Basisteil 6 mit eine Längsseite 23 des Tabletteils 4 verbinden. Des Weiteren ist ein elektrisches Kontaktpaar 24 vorgesehen, das ein erstes und ein zweites Kontaktorgan 26, 28 aufweist. Das erste Kontaktorgan 26 ist hierbei als Connectororgan ausgebildet, das in ein entsprechendes Buchsenorgan als zweites Kontaktorgan 28 im Tabletteil 4 eingreifen kann. Das elektrische Kontaktpaar 24 ist bezüglich einer gemeinsamen Querachse 29 des Tabletteils 4 und des Basisteils 6 symmetrisch angeordnet.

Die Scharnieranordnung 14 wird durch zwei Verzahnungspaare 30 und zwei Einstelleinrichtungen 32 ausgebildet, wobei die Einstelleinrichtungen 32 als Reibscharnieranordnungen ausgebildet sind. Hierbei ist jedem Verzahnungsorgan 34, 36 ein Reiborgan 38, 40 der Reibscharnieranordnung 32 zugeordnet (siehe hierzu Figur 2). , Die Verzahnungspaare 30 und die Einstelleinrichtungen 32 sind hierbei bezüglich einer Querachse 33 symmetrisch angeordnet.

Im vorliegenden Ausführungsbeispiel weisen sowohl das Tabletteil 4 als auch das Basisteil 6 ein Gehäuse aus einem ferromagnetischen Werkstoff auf, so dass ein zumindest teilweise magnetisch ausgeführter Eingabestift 41 einfach am Tabletteil 4 anzuordnen ist.

Figur 2 zeigt nun eine perspektivische Detailansicht der besonders vorteilhaften Ausführungsform gemäß Figur 1. Deutlich zu erkennen ist ein Verzahnungspaar 30 mit der zugeordneten Reibscharnieranordnung 32 und den jeweiligen Verzahnungsorganen 34, 36 und Reiborganen 38, 40. Die Reiborgane 38, 40 besitzen jeweils einen Reibzylinder 39 und sind hierbei fest über ein Stegorgan 42 miteinander verbunden. Des Weiteren ist die Schwenkleiste 12 mit einem Steckerteil 18 verbunden. Die Verzahnungsorgane 34, 36 sind vorzugsweise als zwei längsverzahnte, feststehende Verzahnungsorgane 34, 36 ausgebildet. Das Steckerteil 12 ist hier quaderförmig ausgebildet und greift passgenau in die Aufnahmeöffnung 20 am Tabletteil 4 ein. Das Steckerteil 12 ist drehbar über die Schwenkleiste 14 gelagert.

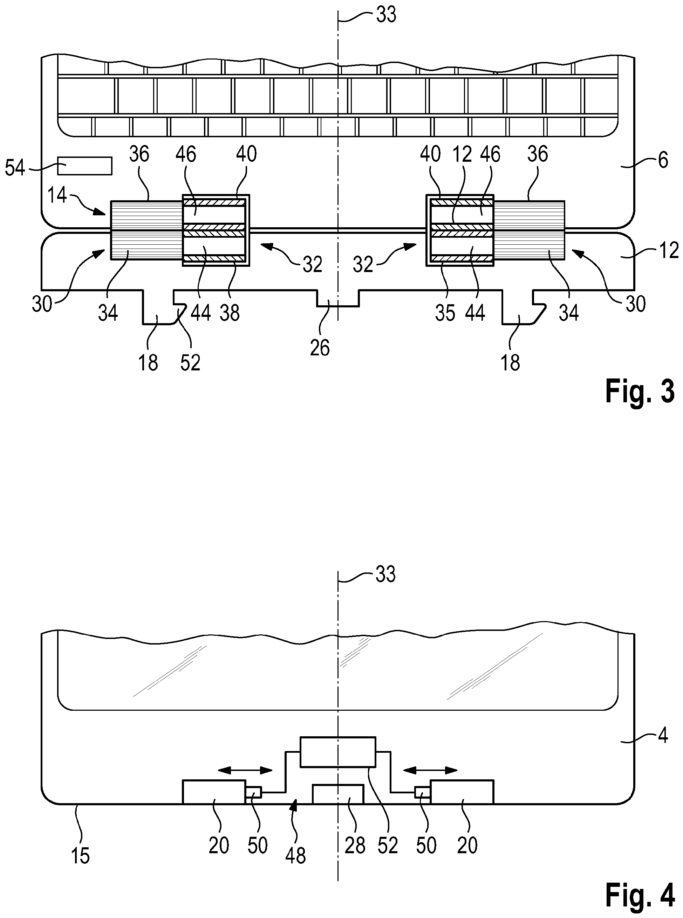

Die komplette Schwenkleiste 12 und insbesondere eine Ausführungsform der Reibscharnieranordnungen 32 sind in Figur 3 dargestellt. Hierbei besitzen die Verzahnungsorgane 34, 36 jeweils ein Stiftorgan 44, 46, das in den Reibzylinder (39) des jeweiligen Reiborgans 38, 40 eingreift und bilden somit eine Einstelleinrichtung 32, die es ermöglicht, das Tabletteil 4 in gekoppeltem Zustand in einer vom Nutzer gewünschten Position einzustellen. Hierzu ist die Reibscharnieranordnung 32 in Bezug auf die Schwenkleiste 12 und das Basisteil 6 verdrehbar. Eine derartige Scharnieranordnung besitzt den Vorteil, dass eine einstellbare Verdrehung des Tabletteils 4 gegenüber dem Basisteil 6 um 360° möglich ist.

Bei dem vorliegenden Ausführungsbeispiel ist eine in Figur 4 näher gezeigte. Feststelleinrichtung 48 im Basisteil 6 integriert. Die hier nicht weiter dargestellte Feststelleinrichtung 48 treibt einen im Steckerteil 12 integrierten Schließstift 50, der auf bekannte Weise einen Vorsprung 52 des Steckerteils 18 im gekoppelten Zustand hintergreift. Hierzu sind die Steckerteile 18 dann in die Aufnahmeöffnungen 20 im Tabletteil 4 eingeführt. Das zweite Kontaktorgan 28 ist hier als Buchsenorgan für das Connectororgan 26 ausgebildet.

Wie schematisch dargestellt, besitzt im vorliegenden Ausführungsbeispiel die Feststelleinrichtung 48 ein als Elektromagnet ausgebildetes Antriebsmittel 52. Die Feststelleinrichtung 48 ist über einen in Figur 1 dargestellten Auslöseknopf 54 auf einfache Weise bedienbar. Es sind natürlich auch weitere Antriebsmittel, wie zum Beispiel ein Elektromotor, denkbar. Möglich ist es auch, eine manuell zu bedienende federbelastete Feststelleinrichtung einzusetzen.

In den gezeigten Ausführungsbeispielen wurde jeweils von einem elektrischen Kontaktpaaren 24 und zwei Steckverbindungen 22 ausgegangen. Es ist jedoch auch möglich, beispielsweise zwei elektrische Kontaktpaare 24 vorzusehen.

## Patentansprüche

1. Computeranordnung mit einem Bildschirm (4) und einem Basisteil (6), die über eine Schwenkleiste (12) lösbar miteinander verbindbar sind, wobei eine Scharnieranordnung (14) und eine Feststelleinrichtung (48) vorgesehen sind und der Bildschirm (4) und das Basisteil (6) mittels einer Einstelleinrichtung (32) in einer Position zueinander fixierbar sind, wobei mindestens ein elektrisches Kontaktpaar (24), bestehend aus einem ersten und einem zweiten Kontaktorgan (26, 28), und mindestens eine Steckverbindung (22), bestehend aus einem Steckerteil (18) und einer Aufnahmeöffnung (20), vorgesehen sind, die im gekoppelten Zustand des Bildschirms (4) mit dem Basisteil (6) sowohl eine elektrische als auch mechanische Verbindung ausbilden, wobei das Basisteil (6) über die Scharnieranordnung (14) mit der Schwenkleiste (12) verbunden ist, die an einer zum Bildschirm (4) gerichteten Längsseite (17) mindestens zwei Steckerteile (18) und mindestens ein erstes Kontaktorgan (26) aufweist und dass der Bildschirm (4) an einer zur Schwenkleiste (6) gerichteten Längsseite (23) mindestens zwei Aufnahmeöffnungen (20) und mindestens ein zweites Kontaktorgan (28) aufweist, **dadurch gekennzeichnet, dass** der Bildschirm (4) als Tabletteil ausgeführt ist, wobei das elektrische Kontaktpaar (24) als Connector-Verbindung mit einem Connectororgan als erstes Kontaktorgan (26) und einem Buchsenorgan als zweites Kontaktorgan (28) ausgeführt ist, wobei das Steckerteil (18) und das Connectororgan (26) an der Schwenkleiste (12) und die Aufnahmeöffnung (20) und das Buchsenorgan (28) am Tabletteil (4) vorgesehen sind, wobei die Scharnieranordnung (46) zwei Verzahnungspaare (30) und mindestens eine, einem Verzahnungspaar (30) zugeordnete Einstelleinrichtung (32) aufweist, die als Reibscharnieranordnung mit zwei Reiborganen (38, 40) ausgeführt ist, wobei die Verzahnungspaare (30) jeweils zwei symmetrisch zu einer Querachse (33) angeordnete, ineinander greifbare Verzahnungsorgane (34, 36) ausbilden, wobei zumindest einem Verzahnungspaar (30) jeweils eine Reibscharnieranordnung (32) zugeordnet ist, wobei das Reiborgan (38, 40) jeweils einen Reibzylinder (39) aufweist, wobei in den Reibzylinder (39) des ersten Reiborgans (38) ein Stiftorgan (44) des ersten Verzahnungsorgans (34) der Schwenkleiste (12) und in den Reibzylinder (39) des zweiten Reiborgans (40) ein Stiftorgan (46) des zweiten Verzähnungsorgans (36) des Basisteils (6) eingreift, wobei die Reiborgane (38, 40) fest über ein Stegorgan (42) miteinander verbunden sind.

2. Computeranordnung nach Anspruch 1, **dadurch gekennzeichnet, dass** die Verzahnungsorgane (34, 36) eines Verzahnungspaares (30) als längsverzahnte, feststehende Verzahnungsorgane ausgebildet sind.

3. Computeranordnung nach Anspruch 1 oder 2, **dadurch gekennzeichnet, dass** die Feststelleinrichtung (48) im Bereich der Steckverbindung (22) einen verschiebbaren Schließstift (50) aufweist, der im gekoppelten Zustand mit dem jeweiligen Steckerteil (18) zusammenwirkt.

4. Computeranordnung nach einem der vorhergehenden Ansprüche, **dadurch gekennzeichnet, dass** die Feststelleinrichtung (48) ein Antriebsmittel (52), wie z. B. einen Elektromotor oder einen Elektromagneten, aufweist.

5. Computeranordnung nach einem der vorhergehenden Ansprüche, **dadurch gekennzeichnet, dass** eine zentrale Connector-Verbindung (24) vorgesehen ist.

6. Computeranordnung nach einem der vorhergehenden Ansprüche, **dadurch gekennzeichnet, dass** bezüglich der gemeinsamen Querachse (33) des Tabletteils (4) und des Basisteils (6) das mindestens eine elektrische Kontaktpaar (24) und die mindestens zwei Steckverbindungen (22) symmetrisch ausgeführt sind.

7. Computeranordnung nach einem der vorhergehenden Ansprüche, **dadurch gekennzeichnet, dass** sowohl im Tabletteil (4) als auch im Basisteil (6) ein Prozessor vorgesehen ist.

8. Computeranordnung nach einem der vorhergehenden Ansprüche, **dadurch gekennzeichnet, dass** zumindest das Tabletteil 84) ein Gehäuse aus einem ferromagnetischen Werkstoff aufweist, derart, dass Zubehörteile, wie z. B. ein Eingabestift (41), über eine magnetische Verbindung am Tabletteil (4) an zu ordnen sind.

## Claims

1. Computer assembly with a screen (4) and a base part (6) which can be detachably connected to one another via a pivoting rail (12), wherein a hinge arrangement (14) and a securing device (48) are provided, and the screen (4) and the base part (6) can be secured in position with respect to one another by means of a setting device (32), wherein at least one pair of electrical contacts (24), comprised from a first and a second contact element (26, 28) and at least one plug-type connection (22) comprised of a plug component (18) and of a receptacle opening (20) are provided, and in a state in which the screen (4) is coupled to the base part (6) they perform both an electrical and a mechanical connection, wherein the base part (6) is connected via the hinge arrangement (14) to the pivoting rail (12) which has at least two plug components (18) and at least a first contact element (26) on a longitudinal side (17) directed towards the screen (4), and wherein the screen (4) has at least two plug components (20) and at least a second contact element (28) on a longitudinal side (23) directed towards the pivoting rail (6), **characterized in that** the screen (4) is embodied as a tablet part, wherein the electrical contact pair (24) is embodied as a connector connection with a connector element as a first contact element (26) and a socket element as a second contact element (28), wherein the plug part (18) and the connector element (26) are provided on the pivoting rail (12), and the receptacle opening (20) and the socket element (28) are provided on the tablet part (4), wherein the hinge arrangement (46) has two toothing systems (30) and at least one setting device (32) which is assigned to a toothing system pair (30) and is embodied as a friction hinge arrangement with two friction elements (38, 40), wherein the toothing system pairs (30) each form two toothing system elements (34, 36) which are arranged symmetrically with respect to a transverse axis (33) and can engage one in the other, wherein in each case a friction hinge arrangement (32) is assigned to at least one toothing system pair (30), wherein the friction element (38, 40) has in each case a friction cylinder (39), wherein a pin element. (44) of the first toothing system element (34) of the pivoting rail (12) engages in the friction cylinder (39) of the first friction element (38), and a pin element (46) of the second toothing system element (36) of the base part (6) engages in the friction cylinder (39) of the second friction element (40) wherein the friction elements (38, 40) are fixedly connected to one another by means of a web element (42) .

2. Computer arrangement according to Claim 1, **characterized in that** the toothing system elements (34, 36) of a toothing system pair (30) are embodied as fixed toothing system elements with longitudinal toothing.

3. Computer arrangement according to Claim 1 or 2, **characterized in that** the securing device (48) has, in the region of the plug-type connection (22), a displaceable closing pin (50) which in the coupled state interacts with the respective plug component (18).

4. Computer arrangement according to one of the preceding claims, **characterized in that** the securing device (48) has a drive means (52) such as e.g. an electric motor or a solenoid.

5. Computer arrangement according to one of the preceding claims, **characterized in that** a central connector connection (24) is provided.

6. Computer arrangement according to one of the preceding claims, **characterized in that** the at least one electrical contact pair (24) and the at least two plug-type connections (22) are embodied symmetrically with respect to the common transverse axis (33) of the tablet part (4) and of the base part (6).

7. Computer arrangement according to one of the preceding claims, **characterized in that** a processor is provided both in the tablet part (4) and in the base part (6).

8. Computer arrangement according to one of the preceding claims, **characterized in that** at least the tablet part (4) has a housing composed of a ferromagnetic material such that accessory components such as e.g. an input pin (41) can be arranged on the tablet part (4) by means of a magnetic connection.

## Revendications

1. Ensemble informatique comprenant un écran (4) et une partie de base (6) qui peuvent être reliés de manière amovible l'un à l'autre par le biais d'une barre pivotante (12), un ensemble formant charnière (14) et un dispositif de verrouillage (48) étant prévus et l'écran (4) et la partie de base (6) pouvant être fixés dans une position l'un par rapport à l'autre au moyen d'un dispositif de réglage (32), au moins une paire de contacts électriques (24), comprenant un premier et un deuxième élément de contact (26, 28), et au moins une liaison par enfichage (22), comprenant une partie formant fiche (18) et une ouverture de réception (20), étant prévues qui forment, lorsque l'écran (4) est accouplé à la partie de base (6), à la fois une liaison électrique et une liaison mécanique, la partie de base (6) étant reliée par le biais de l'ensemble formant charnière (14) à la barre pivotante (12) qui comporte, sur un côté longitudinal (17) dirigé vers l'écran (4), au moins deux parties formant fiche (18) et au moins un premier élément de contact (26) et l'écran (4) comportant, sur un côté longitudinal (23) dirigé vers la barre pivotante (6), au moins deux ouvertures de réception (20) et au moins un deuxième élément de contact (28), **caractérisé en ce que** l'écran (4) est conçu comme une partie formant tablette, la paire de contacts électriques (24) étant conçue comme une liaison par connecteur pourvue d'un élément mâle comme premier élément de contact (26) et d'un élément femelle comme deuxième élément de contact (28), la partie formant fiche (18) et l'élément mâle (26) étant prévus au niveau de la barre pivotante (12) et l'ouverture de réception (20) et l'élément femelle (28) étant prévus au niveau de la partie formant tablette (4), l'ensemble formant charnière (46) comportant deux paires de dentures (30) et au moins un dispositif de réglage (32) associé à une paire de dentures (30), qui est conçu comme un ensemble formant charnière à friction pourvu de deux éléments de friction (38, 40), les paires de dentures (30) formant chacune deux-éléments de denture (34, 36) disposés symétriquement par rapport à un axe transversal (33) et s'engrenant l'un dans l'autre, un ensemble formant charnière à friction (32) étant associé à au moins une paire de dentures (30), chaque élément de friction (38, 40) comportant un cylindre de friction (39), un élément formant broche (44) du premier élément de denture (34) de la barre pivotante (12) s'engageant dans le cylindre de friction (39) du premier élément de friction (38) et un élément formant broche (46) du deuxième élément de denture (36) de la partie de base (6) s'engageant dans le cylindre de friction (39) du deuxième élément de friction (40), les éléments de friction (38, 40) étant reliés les uns aux autres de manière fixe par le biais d'un élément formant nervure (42).

2. Ensemble informatique selon la revendication 1, **caractérisé en ce que** les éléments de denture (34, 36) d'une paire de dentures (30) sont réalisés sous forme d'éléments de denture fixes dentés longitudinalement.

3. Ensemble informatique selon la revendication 1 ou 2, **caractérisé en ce que** le dispositif de verrouillage (48) comporte dans la région de la liaison par enfichage (22) une broche de fermeture coulissante (50) qui coopère à l'état accouplé avec la partie formant fiche (18) respective.

4. Ensemble informatique selon l'une des revendications précédentes, **caractérisé en ce que** le dispositif de verrouillage (48) comporte un moyen d'entraînement (52), comme par exemple un moteur électrique ou un électroaimant.

5. Ensemble informatique selon l'une des revendications précédentes, **caractérisé en ce qu'**une liaison mâle centrale (24) est prévue.

6. Ensemble informatique selon l'une des revendications précédentes, **caractérisé en ce que** l'au moins une paire de contacts électriques (24) et les au moins deux liaisons par enfichage (22) sont réalisées de manière symétrique par rapport à l'axe transversal commun (33) de la partie formant tablette (4) et de la partie de base (6).

7. Ensemble informatique selon l'une des revendications précédentes, **caractérisé en ce qu'**un processeur est prévu à la fois dans la partie formant tablette (4) et dans la partie de base (6).

8. Ensemble informatique selon l'une des revendications précédentes, **caractérisé en ce qu'**au moins la partie formant tablette (84) comporte un boîtier en matériau ferromagnétique de sorte que des accessoires, comme par exemple un stylo d'entrée (41), puissent être disposés sur la partie formant tablette (4) par le biais d'une liaison magnétique.
